# FASCICULE DE BREVET EUROPEEN

(11) **EP 2 396 607 B1**
(45) Date de publication et mention de la délivrance du brevet: **12.06.2013**
(21) Numéro de dépôt: 10708296.8
(22) Date de dépôt: 08.02.2010
(51) Int. Cl.: F24J 2/32, F24J 2/05

(54) **CAPTEUR SOLAIRE, ET INSTALLATION DE GÉNÉRATION D'ÉNERGIE ÉLECTRIQUE COMPORTANT DE TELS CAPTEURS SOLAIRES**
SONNENKOLLEKTOR UND KRAFTWERK MIT DERARTIGEN SONNENKOLLEKTOREN
SOLAR COLLECTOR, AND ELECTRICAL POWER-GENERATING PLANT INCLUDING SUCH SOLAR COLLECTORS

(30) Priorité: 12.02.2009 FR 0950884
(43) Date de publication de la demande: 21.12.2011
(73) Titulaire: Sophia Antipolis Energie Developpement, 06560 Valbonne (FR); Commissariat à l'Énergie Atomique et aux Énergies Alternatives, 75015 Paris (FR)
(72) Inventeur: GRUSS, Jean-Antoine, F-38170 Seyssinet (FR); LENÔTRE, Christian, F-06220 Bar-sur-loup (FR); MARECHAL, Alain, F-38210 Tullins (FR); ROSSI, Didier, F-83100 Toulon (FR); WOHRER, Michel, F-92200 Neuilly Sur Seine (FR)
(74) Mandataire: Jacobson, Claude
(86) Numéro de dépôt international: PCT/FR2010/050196
(87) Numéro de publication internationale: WO 2010/092283

(56) Documents cités:
- EP-A- 0 054 319
- EP-A- 1 203 915
- DE-A1- 19 714 774
- DE-U1- 20 108 682
- NL-A- 8 201 773
- US-A- 4 122 831
- US-A- 4 306 543
- US-A1- 2008 209 907

## Description

La présente invention est relative à un capteur solaire du type comprenant :
- un tube extérieur de section circulaire, fermé en l'une de ses extrémités,
- une couche d'absorption du rayonnement solaire disposée à l'intérieur du tube extérieur, et
- un caloduc comportant une partie chaude agencée à l'intérieur du tube extérieur, une partie froide disposée à l'extérieur du tube extérieur, et un réservoir contenant un fluide de caloduc et s'étendant sur la partie chaude et la partie froide,
ledit tube extérieur étant fermé de manière hermétique autour du caloduc en l'autre de ses extrémités, le vide étant formé à l'intérieur dudit tube extérieur. pour la partie chaude (58) du caloduc (56), le réservoir (62) étant appliqué au moins localement contre la couche d'absorption (52).

L'invention concerne également un système de production d'eau chaude à partir d'énergie solaire comprenant :
- une pluralité de capteurs solaires propres à chauffer un fluide caloporteur à partir d'énergie solaire, et
- un circuit de transport du fluide caloporteur entre les capteurs solaires et un distributeur d'eau chaude.

L'invention concerne également une installation de génération d'énergie électrique à partir d'énergie solaire comprenant :
- un système de production d'eau chaude,
- une source froide, et
- une machine thermodynamique de production d'électricité, utilisant l'eau chaude produite par ledit système et la source froide.

On connaît un capteur solaire à tube sous vide comprenant un tube extérieur et un tube intérieur, les tubes étant concentriques et sensiblement cylindriques. Chaque tube est fermé en l'une de ses extrémités, et les tubes sont scellés l'un à l'autre, en l'autre de leurs extrémités. Le capteur solaire comprend une couche d'absorption du rayonnement solaire disposée sur une surface extérieure du tube intérieur, orientée vers le tube extérieur. Le capteur solaire comporte un caloduc présentant une partie chaude (évaporateur) agencée à l'intérieur du tube intérieur, une partie froide (condenseur) disposée à l'extérieur des tubes, et un réservoir contenant un fluide caloporteur, et s'étendant sur la partie chaude et la partie froide. La partie chaude du caloduc comprend le réservoir en forme de cylindre sensiblement centré sur l'axe du tube intérieur, et deux ailettes fixées au réservoir cylindrique, de manière diamétralement opposée, et reliant mécaniquement et thermiquement le réservoir à la surface intérieure du tube intérieur. Le réservoir a un diamètre très inférieur à celui du tube intérieur.

DE 201 08 682 U1 décrit un capteur solaire selon le préambule de la revendication 1.

La conduction thermique jusqu'à la couche d'absorption n'est pas optimale, entraînant des pertes de chaleur importantes.

Un but de l'invention est donc d'améliorer la conduction thermique jusqu'au caloduc, afin de diminuer les pertes de chaleur.

A cet effet, l'invention a pour objet un capteur solaire selon la revendication 1.

D'après la loi de Stefan-Boltzmann, le flux d'énergie émis par un corps noir, également appelé quantité de rayonnement du corps noir, croît comme la puissance quatrième de T, où T représente la température absolue du corps noir, exprimée en kelvin. Le rayonnement de corps noir qui échappe à l'effet de serré provoqué par le tube de verre extérieur croît quant à lui selon une puissance de T plus élevée encore que 4.

Le capteur solaire selon l'invention assure une meilleure conduction thermique entre la couche d'absorption, assimilée à un corps noir, et le caloduc, ce qui diminue nettement l'élévation de la température de la couche d'absorption par rapport à un capteur solaire classique. Ainsi, le capteur solaire selon l'invention permet de diminuer les pertes de chaleur par rayonnement du corps noir échappant à l'effet de serre, améliorant ainsi le rendement du capteur.

Suivant d'autres modes de réalisation, le capteur solaire comprend une ou plusieurs des caractéristiques suivantes, prises isolément ou suivant toutes les combinaisons techniquement possibles :
- le capteur comprend en outre un tube intérieur de section circulaire, disposé à l'intérieur du tube extérieur, chaque tube étant fermé en l'une de ses extrémités, et les tubes étant scellés l'un à l'autre, en l'autre de leurs extrémités, les tubes étant séparés par du vide ;
- le tube intérieur comporte une surface extérieure orientée vers le tube extérieur, et une surface intérieure, la couche d'absorption est disposée contre ladite surface extérieure, et, pour la partie chaude du caloduc, le réservoir est appliqué au moins localement contre ladite surface intérieure ;
- le capteur comporte une interface thermiquement conductrice, agencée entre la couche d'absorption et la partie chaude du caloduc ;
- une section transversale de la partie chaude est en forme d'un arc de cercle d'angle compris entre 180° et 220° ;
- la partie froide du caloduc est propre à être disposée au contact d'un conduit cylindrique, et la partie froide est en forme d'au moins un demi-cylindre ;
- l'axe du demi-cylindre de la partie chaude est distinct de l'axe du demi-cylindre de la partie froide, et le caloduc comporte un rétrécissement de son étendue circonféreritielle et/ou longitudinale entre la partie chaude et la partie froide, par rapport à son étendue dans la partie courante des parties chaude et froide, le rétrécissement formant une charnière de liaison entre la partie chaude et la partie froide ;
- le réservoir comporte au moins trois canaux de circulation du fluide de caloduc, s'étendant généralement côte à côte ;
- le ou chaque canal est orienté sensiblement selon l'axe du demi-cylindre de la partie chaude ;
- le caloduc est réalisé en aluminium.
- le caloduc est formé de deux feuilles métalliques fusionnées entre elles en dehors de la zone formant le réservoir, le réservoir étant formé par un interstice entre les deux feuilles ;
- le caloduc présente une structure de feuille à surface gauche, la feuille comportant un réseau de canaux formant le réservoir, ces canaux étant reliés par un voile.

L'invention a également pour objet un système de production d'eau chaude du type précité, caractérisé en ce que les capteurs solaires sont tels que définis ci-dessus.

Suivant un autre mode de réalisation, le système de production d'eau chaude comprend la caractéristique suivante :
- le circuit de transport comprend un conduit de transport du fluide caloporteur, et le système comprend, pour chaque capteur solaire, une pièce de fixation du capteur au conduit, ladite pièce de fixation étant thermiquement conductrice et disposée au contact du conduit.

L'invention a également pour objet une installation de génération d'énergie électrique du type précité, caractérisée en ce que le système de production d'eau chaude est tel que défini ci-dessus.

L'invention et ses avantages apparaîtront plus clairement à la lecture de la description qui va suivre, donnée uniquement à titre d'exemple et faite en référence aux dessins annexés, sur lesquels :
- la figure 1 est une représentation schématique d'une installation de génération d'énergie électrique selon l'invention,
- la figure 2 est une vue schématique de côté d'un capteur solaire relié à un circuit de transport d'un fluide caloporteur, selon un premier mode de réalisation de l'invention,
- la figure 3 est une vue schématique de dessus du capteur et du circuit de la figure 2,
- la figure 4 est une vue en coupe selon le plan IV de la figure 3,
- la figure 5 est un agrandissement de la zone encadrée V de la figure 4,
- la figure 6 une vue développée schématique d'un caloduc du capteur solaire de la figure 3,
- la figure 7 est une vue analogue à celle de la figure 2 selon un deuxième mode de réalisation de l'invention, et
- la figure 8 une représentation schématique d'un système de production d'eau chaude selon l'invention.

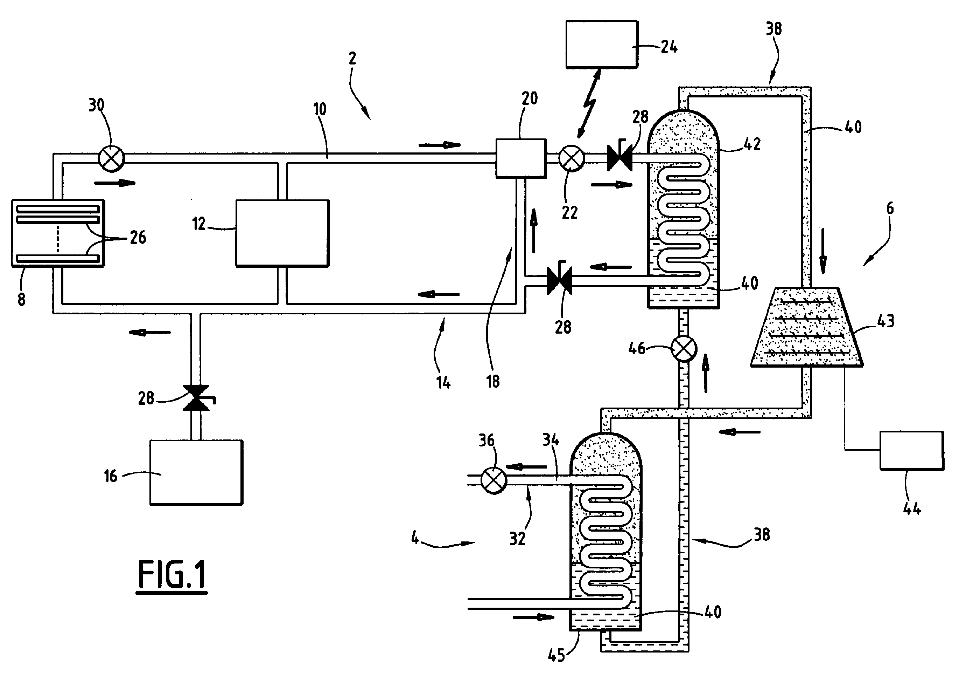

Sur la figure 1, une installation de génération d'énergie électrique à partir d'énergie solaire comporte un système 2 de production d'eau chaude, une source froide 4 et une machine thermodynamique 6 de production de l'électricité.

Le système de production d'eau chaude 2 comprend des moyens de chauffage 8 par énergie solaire d'un premier fluide caloporteur 10, des moyens 12 de stockage de l'énergie thermique et un premier circuit fermé 14 de transport du premier fluide caloporteur 10. Le premier circuit 14 relie les moyens de chauffage 8, les moyens de stockage 12 et la machine thermodynamique 6 de production d'électricité.

Le système de production d'eau chaude 2 comprend une bâche de stockage 16 pour délester le premier circuit 14 de transport du premier fluide caloporteur 10.

Le système de production d'eau chaude 2 comprend une boucle de régulation 18 comportant un mélangeur 20 et une première pompe 22. L'installation comporte des moyens 24 de commande à distance de la boucle 18.

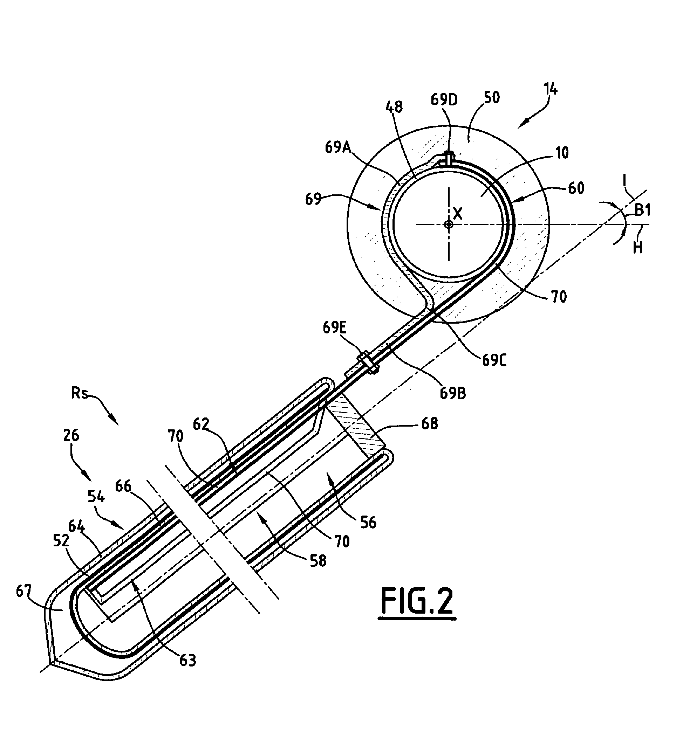

Les moyens de chauffage 8 comportent une pluralité de capteurs solaires 26 décrits plus en détail par la suite en référence aux figures 2 à 7.

Le premier fluide caloporteur 10 est, par exemple, de l'eau utilisée à une température maximale de 150°C et sous une pression maximale de 6 bars.

Le premier circuit 14 comporte une pluralité de vannes 28, le mélangeur 20, la première pompe 22 et une deuxième pompe 30. La circulation du premier fluide 10 dans le premier circuit 14 est assurée par les deux pompes 22, 30.

Les moyens de stockage 12 et le premier circuit 14 sont calorifugés par un isolant, non représenté.

La source froide 4 comprend un deuxième circuit 32 de transport d'un deuxième fluide caloporteur 34. La circulation est assurée par une pompe 36. Le deuxième fluide 34 est, par exemple, de l'eau.

La machine thermodynamique 6 comprend un troisième circuit 38 de transport d'un fluide de service 40, une chaudière 42, une turbine 43 couplée à une génératrice d'électricité 44 et un condenseur 45.

La circulation du fluide de service 40 dans le troisième circuit 38 est assurée par une pompe 46. Le fluide de service 40 est, par exemple, un fluide organique, tel que le butane ou le propane, de préférence le butane. La température d'ébullition du fluide de service 40 est sensiblement basse et proche de 80°C pour une pression de 9,6 bars.

La chaudière 42 est destinée à faire passer le fluide de service 40 de l'état liquide à l'état gazeux, à partir d'eau chaude. Le premier circuit 14 de la source chaude est en forme de serpentin à l'intérieur de la chaudière 42, le serpentin étant au contact du fluide de service 40. En sortie de la chaudière 42, le fluide de service 40 est à l'état gazeux, à une température d'environ 95°C et sous une pression d'environ 11 bars.

La turbine 43 comporte, de manière classique, un rotor comprenant un arbre sur lequel sont fixées des aubes, et un stator comprenant un carter portant des déflecteurs fixes. En sortie de turbine 43, le fluide de service 40 est à l'état gazeux, et à une température d'environ 40°C sous une pression comprise entre 2 et 3 bars. La turbine 43 est destinée à convertir l'énergie issue de la détente du fluide de service 40 à l'état gazeux en énergie mécanique. Le condenseur 45 est destiné à faire passer le fluide de service 40 de l'état à l'intérieur du condenseur 45, ledit serpentin étant au contact du fluide de service 40. En sortie de condenseur 45, le fluide de service 40 est à l'état liquide.

Sur la figure 2, le premier circuit 14 comprend un conduit 48 de transport du premier fluide caloporteur 10, et une gaine thermiquement isolante 50 disposée sur la périphérie du conduit 48. Le conduit 48 est en forme d'un cylindre d'axe orienté selon un plan sensiblement horizontal H.

Le capteur solaire 26 comprend une couche 52 d'absorption d'un rayonnement solaire Rₛ, des moyens d'isolation thermique 54, et un caloduc 56. Le caloduc 56 est formé d'une feuille présentant une surface gauche épousant la forme des moyens d'isolation 54 et du conduit de transport 48. Il comporte une partie chaude 58 agencée à l'intérieur des moyens d'isolation 54, une partie froide 60 disposée à l'extérieur des moyens d'isolation 54. Il comprend un réservoir 62 formé d'un ensemble de canaux reliés les uns aux autres par un voile conférant au caloduc 56 sa structure de feuille. Le réservoir 62 contient un fluide caloporteur de caloduc 63, et s'étend sur la partie chaude 58 et la partie froide 60. Pour la partie chaude 58 du caloduc, le réservoir 62 est appliqué au moins localement contre la couche d'absorption 52.

La couche d'absorption 52 est, par exemple, réalisée en nitrite d'aluminium pulvérisé.

Les moyens d'isolation 54 entourent de manière sensiblement hermétique la couche d'absorption 52 et sont propres à permettre le passage du rayonnement solaire Rₛ. Les moyens d'isolation 54 sont propres à isoler thermiquement la couche d'absorption 52 et la partie chaude 58 du caloduc vis-à-vis des conditions climatiques extérieures au capteur solaire 26.

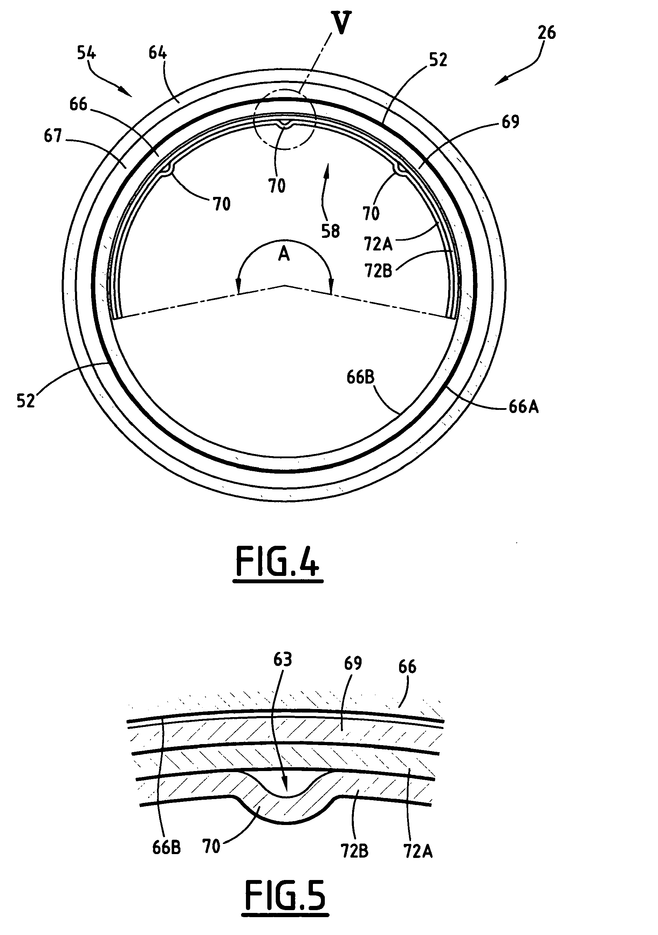

Les moyens d'isolation 54, visibles sur la figure 4, comprennent un tube extérieur 64 et un tube intérieur 66 disposé à l'intérieur du tube extérieur 64. Les tubes 64, 66, sensiblement cylindriques, présentent une section circulaire et sont concentriques d'axe I. Chaque tube 64, 66 est fermé, en forme d'une demi-sphère en l'une de ses extrémités, et les tubes 64, 66 sont scellés l'un à l'autre, en l'autre de leurs extrémités. Le tube intérieur 66 est ouvert en son autre extrémité. Le tube intérieur 66 comporte une surface extérieure 66A orientée vers le tube extérieur 64, et une surface intérieure 66B. Les deux tubes 64, 66 sont séparés par du vide 67. La couche d'absorption 52 est disposée contre la surface extérieure 66A du tube intérieur 66, dans le vide 67. Les tubes 64, 66 sont, par exemple, réalisés en verre.

Les moyens d'isolation 54 comportent un bouchon d'isolation 68 inséré dans l'extrémité ouverte du tube intérieur 66.

Le capteur solaire 26 comporte une interface thermiquement conductrice 69, visible sur les figures 4 et 5, agencée entre la partie chaude 58 du caloduc et les moyens d'isolation 54. Plus précisément, l'interface conductrice 69 est disposée entre la surface intérieure du tube intérieur 66 et la partie chaude 58 du caloduc.

En variante, les moyens d'isolation 54 comprennent le seul tube extérieur 64 fermé en l'une de ses extrémités, la couche d'absorption 52 étant disposée directement sur la partie chaude 58 du caloduc, le vide 67 étant formé à l'intérieur du tube extérieur 64.

La partie chaude 58 du caloduc est en forme d'un demi-cylindre d'axe I, comme représenté sur la figure 4. La section transversale de la partie chaude 58 est en forme d'un arc de cercle d'angle A compris entre 180 ° et 220 °.

La partie chaude 58 du caloduc et notamment la partie du réservoir 62 contenue dans cette partie chaude 58 est appliquée contre la surface intérieure 66B du tube intérieur 66.

En variante, dans le cas où les moyens d'isolation 54 comprennent le seul tube extérieur 64, la partie chaude 58 du caloduc et notamment la partie du réservoir 62 contenue dans cette partie chaude porte directement la couche d'absorption 52.

La partie froide 60 du caloduc est en forme d'un demi-cylindre d'axe X agencé entre le conduit 48 et la gaine isolante 50 en étant enroulé autour du conduit 48, comme représenté sur la figure 2.

L'axe I du demi-cylindre de la partie chaude 58 est distinct de l'axe X du demi-cylindre de la partie froide 60.

L'axe I est incliné par rapport au plan horizontal H, et forme avec le plan horizontal H un premier angle d'inclinaison B1. La valeur du premier angle d'inclinaison B1 est supérieure à 5 °, de préférence supérieure à 30 °.

Chaque capteur solaire 26 est fixé au conduit 48 par l'intermédiaire d'une pièce de fixation 69. Dans l'exemple de réalisation de la figure 2, la pièce de fixation 69 comporte une première portion 69A de forme cylindrique et une seconde portion 69B de forme plane, les première et seconde portions 69A, 69B étant reliées par un coude 69C. La pièce de fixation 69 est thermiquement conductrice, et est, par exemple, réalisée en aluminium. La première portion 69A est agencée au contact du conduit 48, entre le conduit 48 et la gaine thermiquement isolante 50, de manière diamétralement opposée à la partie chaude 60 du caloduc par rapport au conduit 48. La seconde portion 69B est disposée au contact du caloduc 56. La pièce de fixation 69 est attachée au caloduc 56 par l'intermédiaire de premiers moyens de fixation 69D et de seconds moyens de fixation 69E s'étendant à travers des orifices respectifs de la pièce de fixation 69 et du caloduc 56.

Le réservoir 62 comporte, par exemple, trois canaux 70 de circulation du fluide de caloduc 63. Les trois canaux de circulation 70 sont reliés et forment avec leur prolongement dans la partie froide 60 un circuit fermé pour le fluide de caloduc 63. Chacun des canaux 70 est orienté sensiblement selon l'axe I de la partie chaude 58 en forme de demi-cylindre. Le terme 'sensiblement' s'entend par un écart angulaire allant jusqu'à ±5 ° par rapport à l'axe I.

Les canaux 70 présentent des tronçons rectilignes 70A parallèles s'étendant dans la partie chaude 58. Ils sont reliés à leur extrémité libre par un conduit de liaison 70B. Chaque tronçon rectiligne se prolonge par un tronçon rectiligne 70C propre s'étendant dans la partie froide 60. Les tronçons 70A et 70C sont reliés par un faisceau de tronçons convergents 70D puis divergents disposés dans la région de changement de courbure de la feuille formant le caloduc.

Le fluide de caloduc 63 est, par exemple, du méthanol, de l'éthanol, un frigorigène HFC, ou encore un frigorigène HCFC.

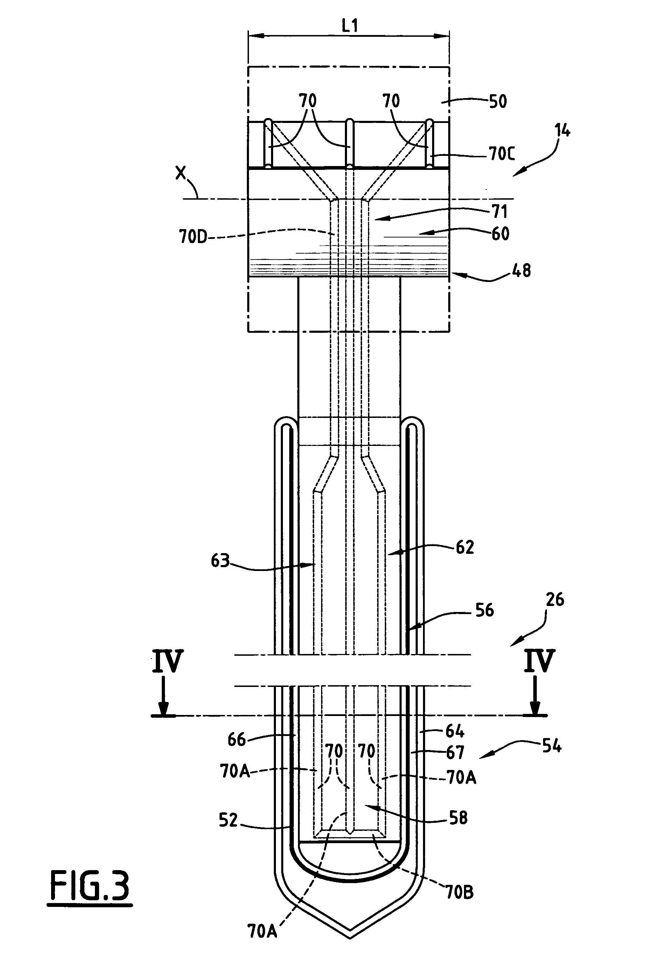

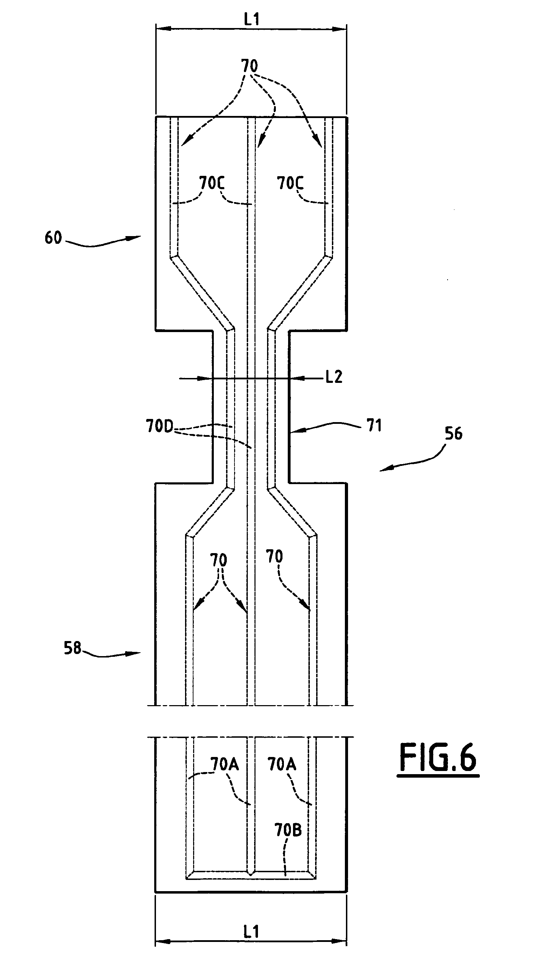

Le caloduc 56 comporte un rétrécissement 71 de son étendue circonférentielle entre la partie chaude 58 et la partie froide 60, par rapport à son étendue dans la partie courante des parties chaude 58 et froide 60. Le rétrécissement 71, visible sur les figures 3 et 6, forme une charnière de liaison entre la partie chaude 58 et la partie froide 60.

Le caloduc 56 est formé de deux feuilles 72A, 72B, visibles sur les figures 4 et 5, et fixées entre elles. Chaque canal 70 du réservoir 62 est formé par un interstice entre les deux feuilles 72A, 72B. Les feuilles 72A, 72B du caloduc sont, par exemple, des feuilles métalliques fusionnées entre elles en dehors des zones délimitant les canaux. Les feuilles métalliques 72A, 72B sont, par exemple, réalisées en aluminium.

La réalisation des interstices formant les canaux 70 du caloduc est obtenue en disposant sur une des deux feuilles 72A, 72B une encre spécifique avant la fusion, afin d'éviter que les deux métaux ne fusionnent dans les zones où l'encre spécifique a été disposée. Les deux feuilles 72A, 72B sont ensuite laminées à chaud pour ne former qu'une seule feuille. Les canaux 70 sont alors obtenus en soufflant de l'air comprimé dans les zones qui ont été encrées.

La figure 6 illustre le caloduc 56 dans sa forme plane après découpe des deux feuilles 72A, 72B fusionnés selon le pourtour désiré, et avant sa conformation en forme de demi-cylindres d'axes I, X. La partie chaude 58 et la partie froide 60 présentent, par exemple, une même première largeur L1 perpendiculairement à une direction d'extension du caloduc 56. La première largeur L1 est, par exemple, égale à 80 mm. Le rétrécissement 71 présente, perpendiculairement à la direction d'extension, une deuxième largeur L2 de valeur inférieure à celle de la première largeur L1. La deuxième largeur L2 est, par exemple, égale à 32 mm.

La température d'utilisation des capteurs solaires à tube sous vide 26 est comprise entre 80°C et 150°C.

Le fonctionnement de l'installation de génération d'énergie électrique, et en particulier des capteurs solaires, va maintenant être décrit.

L'installation de génération d'énergie électrique est dite à basse température, compte tenu de la température maximale du système de production d'eau chaude égale à 150°C qui est nettement inférieure à celle utilisée dans d'autres centrales solaires thermiques, telles que les centrales à capteurs cylindro-paraboliques, les centrales à tours, les centrales à capteurs paraboliques, où la température du fluide caloporteur circulant dans la source chaude est supérieure à 400°C.

Les capteurs solaires 26 des moyens de chauffage 6 captent, durant la journée, le rayonnement solaire Rₛ, puis transmettent au premier fluide caloporteur 10 l'énergie thermique associée au rayonnement solaire Rₛ.

Plus précisément, le rayonnement solaire Rₛ est absorbé par la couche d'absorption 52 de chaque capteur solaire, les moyens d'isolation 54 permettant le passage du rayonnement solaire Rₛ. L'énergie thermique associée à l'absorption du rayonnement solaire Rₛ est alors transmise au caloduc 56 via le tube intérieur 66 et l'interface thermiquement conductrice 69. La dissipation de l'énergie thermique en dehors du capteur solaire 26 est limitée de par les moyens d'isolation thermique 54, le vide 67 assurant l'isolation thermique et l'effet de serre.

Une bonne conduction thermique est assurée entre la couche d'absorption 52, assimilée à un corps noir, et le caloduc 56, le réservoir 62 étant appliqué au moins localement contre la surface intérieure 66B du tube intérieur. Cette bonne conduction thermique diminue nettement l'élévation de la température de la couche d'absorption 52 par rapport à un capteur solaire classique, ce qui permet de diminuer les pertes de chaleur par rayonnement du corps noir échappant à l'effet de serre.

En variante, dans le cas où les moyens d'isolation 54 comprennent le seul tube extérieur 64, une bonne conduction thermique est également assurée entre la couche d'absorption 52 et le caloduc 56, la couche d'absorption 52 étant directement appliquée sur la partie chaude 58 du caloduc.

L'énergie thermique transmise à la partie chaude 58 du caloduc entraîne progressivement un changement de phase du fluide de caloduc 63, de son étant liquide à son état gazeux. Le fluide de caloduc à l'état gazeux s'élève alors en direction de la partie froide 60 du caloduc, à travers les différents canaux 70 du réservoir. Le réservoir 62 étant appliqué au moins localement contre la couche d'absorption 52 dans la partie chaude 58 du caloduc, la conduction thermique est améliorée entre la couche d'absorption 52 et le fluide de caloduc 63, de sorte que les pertes de chaleur sont réduites.

La chaleur transportée par le fluide de caloduc 63 de la partie chaude 58 vers la partie froide 60 est alors transmise au premier fluide caloporteur 10 par conduction thermique entre les canaux 70 disposés dans la partie froide 60 et le conduit 48 du premier circuit. Cette conduction thermique entraîne alors une élévation de la température du premier fluide caloporteur 10 et un abaissement de la température du fluide de caloduc 63.

Suite à l'abaissement de la température du fluide de caloduc 63, le fluide de caloduc 63 change à nouveau progressivement de phase, de son état gazeux à son état liquide. Le fluide de caloduc à l'état liquide redescend alors par gravitation de la partie froide 60 vers la partie chaude 58, de par l'angle d'inclinaison B1, afin de transporter à nouveau de l'énergie thermique issue du rayonnement solaire.

Les moyens de stockage 12 servent alors de tampons entre l'énergie thermique produite par les capteurs solaires 26 des moyens de chauffage et celle consommée par la machine thermodynamique 6 de production d'électricité. Les moyens de chauffage 12 permettent donc de découpler la production d'électricité de la disponibilité solaire.

Plusieurs modes de fonctionnement sont envisageables au niveau du système de production d'eau chaude 2, à l'aide des vannes 28, du mélangeur 20 et des pompes 22, 30 : le stockage seul d'énergie thermique, la production directe d'énergie thermique, le stockage et la production d'énergie thermique, le déstockage d'énergie thermique et la production directe d'énergie thermique, et le déstockage seul d'énergie thermique.

La boucle de régulation 18 permet d'adapter la quantité d'énergie thermique fournie par le système de production d'eau chaude 2 à la machine thermodynamique 6 de production d'électricité.

De par la chaleur apportée par le système de production d'eau chaude 2, le fluide de service 40 passe de l'état liquide à l'état gazeux dans la chaudière 42. Le fluide de service 40 arrive ainsi à l'état gazeux à l'entrée de la turbine 43. Le fluide de service à l'état gazeux se détend alors dans la turbine 43 et fournit de l'énergie mécanique, en entraînant le rotor de la turbine en rotation. Cette énergie mécanique est transmise à la génératrice 44, afin de produire de l'électricité. En sortie de la turbine 43, le fluide de service 40 est toujours à l'état gazeux, et sous une pression nettement inférieure.

Le fluide de service 40 repasse alors à l'état liquide dans le condenseur 45 au contact de la source froide 4. En sortie du condenseur 45, le fluide de service 40 à l'état liquide est alors entraîné par la pompe 46 pour retourner à l'entrée de la chaudière 42 et exploiter de nouveau la chaleur fournie par le système de production d'eau chaude 2.

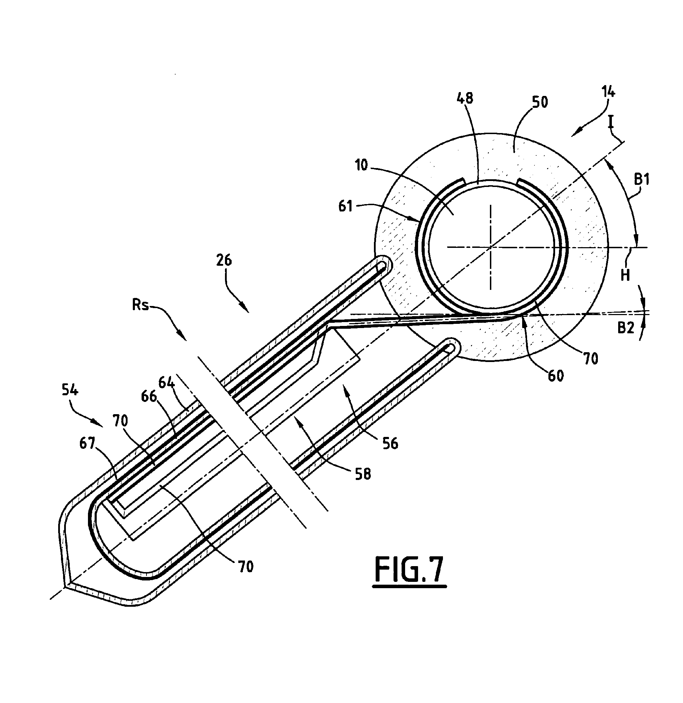

La figure 7 illustre un autre mode de réalisation, pour lequel les éléments analogues au mode de réalisation décrit précédemment sont repérés par des références identiques.

Selon ce deuxième mode de réalisation, les moyens d'isolation 54 ne comportent pas de bouchon d'isolation à l'extrémité ouverte du tube intérieur 66. L'isolation à l'extrémité ouverte du tube intérieur 66 est assurée par la gaine isolante 50 disposée autour du conduit 48, les extrémités scellées entre elles des tubes 64, 66 étant agencées au contact de la gaine isolante 50.

La partie froide 60 du caloduc est en forme de deux demi-cylindres diamétralement opposés par rapport au conduit 48. Les demi-cylindres de la partie froide 60 sont disposés entre le conduit 48 et la gaine isolante 50.

Le caloduc 56 présente un deuxième angle d'inclinaison B2 entre le sommet de la partie chaude 58 et le bas du conduit 48. La variation du premier angle d'inclinaison B1 entre l'axe de la partie chaude 58 du caloduc et le plan horizontal H a une influence sur le deuxième angle d'inclinaison B2. La valeur du deuxième angle d'inclinaison B2 est, par exemple, supérieure à 5°, afin de permettre une descente gravitationnelle relativement rapide du fluide de caloduc 63 à l'état liquide de la partie froide 60 vers la partie chaude 58.

Le fonctionnement de ce deuxième mode de réalisation est identique à celui du premier mode de réalisation, et n'est donc pas décrit à nouveau.

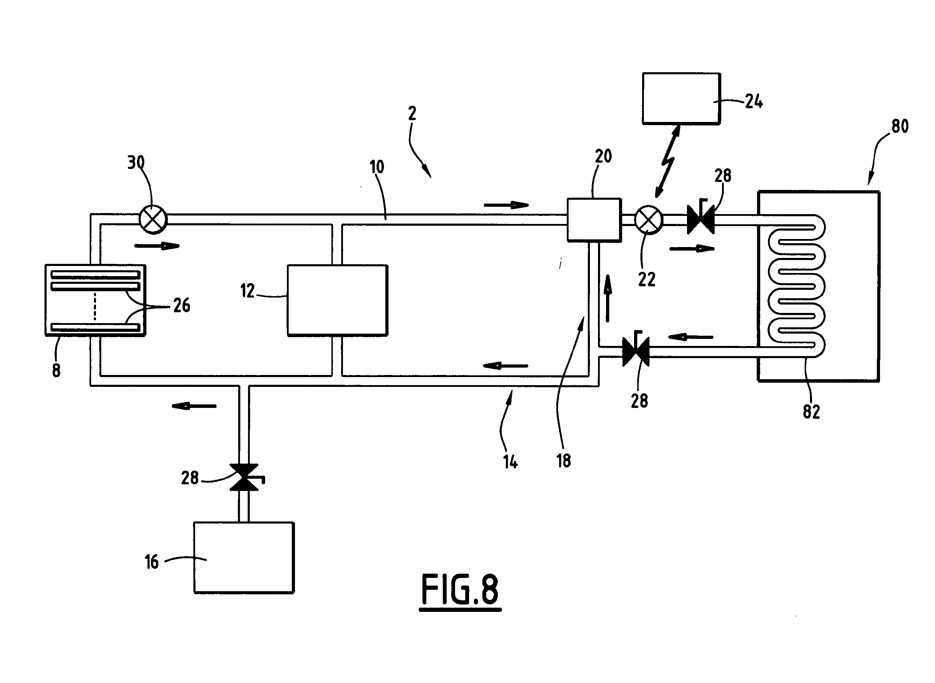

La figure 8 illustre un autre mode de réalisation, pour lequel les éléments analogues au mode de réalisation décrit précédemment sont repérés par des références identiques.

Selon ce troisième mode de réalisation, le système de production d'eau chaude 2 comprend un distributeur 80 d'eau chaude, et n'est pas relié à une machine thermodynamique de production d'électricité. Le circuit 14 de transport du fluide caloporteur 10 relie les capteurs solaires 26 au distributeur d'eau chaude 80. Le distributeur 80 comprend un échangeur 82, en forme de serpentin, destiné à exploiter la chaleur transportée par le fluide caloporteur 10.

Le fonctionnement de ce troisième mode de réalisation est identique à celui du premier mode de réalisation, et n'est donc pas décrit à nouveau.

On conçoit ainsi que le capteur solaire selon l'invention permet d'assurer une meilleure conduction thermique entre la couche d'absorption et le réservoir dans la partie chaude du caloduc, ce qui permet de limiter les pertes de chaleur.

## Revendications

1. Capteur solaire (26) du type comprenant :
- un tube extérieur (64) de section circulaire, fermé en l'une de ses extrémités,
- une couche (52) d'absorption du rayonnement solaire (Rₛ) disposée à l'intérieur du tube extérieur (64), et
- un caloduc (56) comportant une partie chaude (58) agencée à l'intérieur du tube extérieur (64), une partie froide (60) disposée à l'extérieur du tube extérieur (64), et un réservoir (62) contenant un fluide de caloduc (63) et s'étendant sur la partie chaude (58) et la partie froide (60),
ledit tube extérieur (64) étant fermé de manière hermétique autour du caloduc (56) en l'autre de ses extrémités, le vide étant formé à l'intérieur dudit tube extérieur (64)
pour la partie chaude (58) du caloduc (56), le réservoir (62) étant appliqué au moins localement contre la couche d'absorption (52),
**caractérisé en ce que** la partie chaude (58) du caloduc (56) est en forme d'un demi-cylindre.

2. Capteur solaire (26) selon la revendication 1, **caractérisé en ce qu'**il comprend en outre un tube intérieur (66) de section circulaire, disposé à l'intérieur du tube extérieur (64), chaque tube (64, 66) étant fermé en l'une de ses extrémités, et les tubes (64, 66) étant scellés l'un à l'autre, en l'autre de leurs extrémités, les tubes (64, 66) étant séparés par du vide.

3. Capteur solaire (26) selon la revendication 2, **caractérisé en ce que** le tube intérieur (66) comporte une surface extérieure orientée vers le tube extérieur (64), et une surface intérieure, **en ce que** la couche d'absorption (52) est disposée contre ladite surface extérieure, et **en ce que**, pour la partie chaude (58) du caloduc (56), le réservoir (62) est appliqué au moins localement contre ladite surface intérieure.

4. Capteur solaire (26) selon l'une quelconque des revendications précédentes, **caractérisé en ce qu'**il comporte une interface thermiquement conductrice (69), agencée entre la couche d'absorption (52) et la partie chaude (58) du caloduc (56).

5. Capteur solaire (26) selon l'une quelconque des revendications précédentes, **caractérisé en ce qu'**une section transversale de la partie chaude (58) est en forme d'un arc de cercle d'angle (A) compris entre 180 ° et 220 °.

6. Capteur solaire (26) selon l'une quelconque des revendications précédentes, **caractérisé en ce que** la partie froide (60) du caloduc (56) est propre à être disposée au contact d'un conduit cylindrique (48), et **en ce que** la partie froide (60) est en forme d'au moins un demi-cylindre.

7. Capteur solaire (26) selon la revendication 6, **caractérisé en ce que** l'axe (I) du demi-cylindre de la partie chaude (58) est distinct de l'axe (X) du demi-cylindre de la partie froide (60), et **en ce que** le caloduc (56) comporte un rétrécissement (71) de son étendue circonférentielle et/ou longitudinale entre la partie chaude (58) et la partie froide (60), par rapport à son étendue dans la partie courante des parties chaude (58) et froide (60), le rétrécissement (71) formant une charnière de liaison entre la partie chaude (58) et la partie froide (60).

8. Capteur solaire (26) selon l'une quelconque des revendications précédentes, **caractérisé en ce que** le réservoir (62) comporte au moins trois canaux de circulation (70) du fluide de caloduc (63), s'étendant généralement côte à côte.

9. Capteur solaire (26) selon la revendication 8, **caractérisé en ce que** le ou chaque canal (70) est orienté sensiblement selon l'axe (I) du demi-cylindre de la partie chaude (58).

10. Capteur solaire (26) selon l'une quelconque des revendications précédentes, **caractérisé en ce que** le caloduc (56) est réalisé en aluminium.

11. Capteur solaire (26) selon l'une quelconque des revendications précédentes, **caractérisé en ce que** le caloduc (56) est formé de deux feuilles métalliques (72A, 72B) fusionnées entre elles en dehors de la zone formant le réservoir (62), le réservoir (62) étant formé par un interstice entre les deux feuilles (72A, 72B).

12. Capteur selon l'une quelconque des revendications précédentes, **caractérisé en ce que** le caloduc (56) présente une structure de feuille à surface gauche, la feuille comportant un réseau de canaux (70) formant le réservoir (62), ces canaux (70) étant reliés par un voile.

13. Système (2) de production d'eau chaude à partir d'énergie solaire comprenant :
- une pluralité de capteurs solaires (26) propres à chauffer un fluide caloporteur (10) à partir d'énergie solaire, et
- un circuit (14) de transport du fluide caloporteur (10) entre les capteurs solaires (26) et un distributeur (80) d'eau chaude,
**caractérisé en ce que** les capteurs solaires (26) sont conformes à l'une quelconque des revendications 1 à 12.

14. Système selon la revendication 13, **caractérisé en ce que** le circuit de transport (14) comprend un conduit (48) de transport du fluide caloporteur (10), et **en ce que** le système comprend, pour chaque capteur solaire (26), une pièce (69) de fixation du capteur (26) au conduit (48), ladite pièce de fixation (69) étant thermiquement conductrice et disposée au contact du conduit (48).

15. Installation de génération d'énergie électrique à partir d'énergie solaire comprenant :
- un système de production d'eau chaude (2),
- une source froide (4), et
- une machine thermodynamique (6) de production d'électricité, utilisant l'eau chaude produite par ledit système (2) et la source froide (4),
**caractérisée en ce que** le système de production d'eau chaude (2) est conforme à la revendication 13 ou 14.

## Patentansprüche

1. Sonnenkollektor (26) des Typs, der aufweist:
- ein äußeres Rohr (64) mit kreisförmigem Querschnitt, das an einem seiner Enden geschlossen ist,
- eine Schicht (52) zum Absorbieren von Sonnenstrahlung (Rs), die im Inneren des äußeren Rohres (64) angeordnet ist, und
- ein Wärmerohr (56), aufweisend einen warmen Abschnitt (58), der im Inneren des äußeren Rohres (64) eingerichtet ist, einen kalten Abschnitt (60), der außerhalb von dem äußeren Rohr (64) angeordnet ist, und einen Behälter (62), der ein Wärmerohrfluid (63) enthält und sich über den warmen Abschnitt (58) und den kalten Abschnitt (60) erstreckt,
wobei das äußere Rohr (64) an dem anderen seiner Enden hermetisch um das Wärmerohr (56) herum abgeschlossen ist, wobei im Inneren des äußeren Rohres (64) ein Vakuum ausgebildet ist,
wobei der Behälter (62) bezüglich des warmen Abschnitts (58) des Wärmerohres (56) zumindest lokal an die Absorptionsschicht (52) angelegt ist,
**dadurch gekennzeichnet, dass** der warme Abschnitt (58) des Wärmerohres (56) in Form eines Halbzylinders ausgebildet ist.

2. Sonnenkollektor (26) gemäß Anspruch 1, **dadurch gekennzeichnet, dass** er ferner ein inneres Rohr (66) mit kreisförmigem Querschnitt aufweist, das im Inneren des äußeren Rohres (64) angeordnet ist, wobei jedes Rohr (64, 66) an einem seiner Enden geschlossen ist und die Rohre (64, 66) an dem anderen ihrer Enden miteinander verplombt sind, wobei die Rohre (64, 66) durch ein Vakuum voneinander getrennt sind.

3. Sonnenkollektor (26) gemäß Anspruch 2, **dadurch gekennzeichnet, dass** das innere Rohr (66) eine Außenfläche, die in Richtung zu dem äußeren Rohr (64) ausgerichtet ist, und eine innere Fläche aufweist, dass die Absorptionsschicht (52) gegen die Außenfläche angeordnet ist, und dass bezüglich des warmen Abschnitts (58) des Wärmerohres (56) der Behälter (62) zumindest lokal an der Innenfläche anliegt.

4. Sonnenkollektor (26) gemäß irgendeinem der vorhergehenden Ansprüche, **dadurch gekennzeichnet, dass** er eine wärmeleitende Schnittstelle (69) aufweist, die zwischen der Absorptionsschicht (52) und dem warmen Abschnitt (58) des Wärmerohres (56) angeordnet ist.

5. Sonnenkollektor (26) gemäß irgendeinem der vorhergehenden Ansprüche, **dadurch gekennzeichnet, dass** ein Querschnitt des warmen Abschnitts (58) kreisbogenförmig ist, mit einem Winkel (A), der zwischen 180° und 220° beträgt.

6. Sonnenkollektor (26) gemäß irgendeinem der vorhergehenden Ansprüche, **dadurch gekennzeichnet, dass** der kalte Abschnitt (60) des Wärmerohres (56) geeignet ist, um in Kontakt mit einer zylinderförmigen Leitung (48) angeordnet zu sein, und dass der kalte Abschnitt (60) die Form mindestens eines Halbzylinders hat.

7. Sonnenkollektor (26) gemäß Anspruch 6, **dadurch gekennzeichnet, dass** sich die Achse (I) des Halbzylinders des warmen Abschnitts (58) von der Achse (X) des Halbzylinders des kalten Abschnitts (60) unterscheidet, und dass das Wärmerohr (56) eine Verjüngung (71) seiner Umfangs- und/oder Längsausdehnung zwischen dem warmen Abschnitt (58) und dem kalten Abschnitt (60) bezüglich seiner Ausdehnung in dem Strömungsabschnitt des warmen (58) und des kalten (60) Abschnitts aufweist, wobei die Verjüngung (71) ein Verbindungsgelenk zwischen dem warmen Abschnitt (58) und dem kalten Abschnitt (60) bildet.

8. Sonnenkollektor (26) gemäß irgendeinem der vorhergehenden Ansprüche, **dadurch gekennzeichnet, dass** der Behälter (62) mindestens drei Kanäle zum Zirkulieren (70) des Wärmerohrfluids (63) aufweist, die sich im Wesentlichen nebeneinander erstrecken.

9. Sonnenkollektor (26) gemäß Anspruch 8, **dadurch gekennzeichnet, dass** der oder jeder Kanal (70) im Wesentlichen entlang der Achse (I) des Halbzylinders des warmen Abschnitts (58) ausgerichtet ist.

10. Sonnenkollektor (26) gemäß irgendeinem der vorhergehenden Ansprüche, **dadurch gekennzeichnet, dass** das Wärmerohr (56) aus Aluminium gebildet ist.

11. Sonnenkollektor (26) gemäß irgendeinem der vorhergehenden Ansprüche, **dadurch gekennzeichnet, dass** das Wärmerohr (56) aus zwei Metallfolien (72A, 72B) gebildet ist, die außerhalb des Bereichs, der das Becken (62) ausbildet, miteinander verschmolzen sind, wobei das Becken (62) durch einen Zwischenraum zwischen den beiden Folien (72A, 72B) ausgebildet ist.

12. Kollektor gemäß irgendeinem der vorhergehenden Ansprüche, **dadurch gekennzeichnet, dass** das Wärmerohr (56) eine Folienstruktur mit einer gekrümmten Fläche aufweist, wobei die Folie ein den Behälter (62) ausbildendes Kanalnetz (70) aufweist, wobei die Kanäle (70) durch eine Umhüllung miteinander verbunden sind.

13. System (2) zum Erzeugen von Warmwasser ausgehend von Sonnenenergie, aufweisend:
- eine Mehrzahl von Sonnenkollektoren (26), die geeignet sind, ein Wärmeübertragungsfluid (10) ausgehend von Sonnenenergie zu erwärmen, und
- einen Kreislauf (14) zum Transportieren des Wärmeübertragungsfluids (10) zwischen den Sonnenkollektoren (26) und einem Warmwasserverteiler (80),
**dadurch gekennzeichnet, dass** die Sonnenkollektoren (26) gemäß irgendeinem der Ansprüche 1 bis 12 sind..

14. System gemäß Anspruch 13, **dadurch gekennzeichnet, dass** der Transportkreislauf (14) eine Leitung (48) zum Transportieren des Wärmeübertragungsfluids (10) aufweist, und dass das System für jeden Sonnenkollektor (26) ein Teil (69) zum Befestigen des Kollektors (26) an der Leitung (48) aufweist, wobei das Befestigungsteil (69) wärmeleitend ist und in Kontakt mit der Leitung (48) angeordnet ist.

15. Einrichtung zum Erzeugen von elektrischer Energie ausgehend von Sonnenenergie, aufweisend:
- ein System zum Erzeugen von Warmwasser (2),
- eine Kältequelle (4) und
- eine thermodynamische Vorrichtung (6) zum Erzeugen von Elektrizität mittels des von dem System (2) hergestellten Warmwassers und der Kältequelle (4),
**dadurch gekennzeichnet, dass** das System zum Erzeugen von Warmwasser (2) gemäß dem Anspruch 13 oder 14 ist.

## Claims

1. Solar collector (26) of the type comprising:
- an outer tube (64) of circular cross-section, closed at one of its ends,
- a layer (52) for absorbing solar radiation (Rₛ) placed inside the outer tube (64), and
- a heat pipe (56) comprising a hot part (58) arranged inside the outer tube (64), a cold part (60) placed outside the outer tube (64) and a reservoir (62) containing a heat pipe fluid (63) and extending over the hot part (58) and the cold part (60),
the said outer tube (64) being hermetically closed around the heat pipe (56) at the other of its ends, a vacuum being formed inside the said outer tube (64)
for the hot part (58) of the heat pipe (56), the reservoir (62) being applied at least locally against the absorption layer (52),
**characterised in that** the hot part (58) of the heat pipe (56) is in the form of a semi-cylinder.

2. Solar collector (26) according to claim 1, **characterised in that** it furthermore comprises an inner tube (66) of circular cross-section, placed inside the outer tube (64), each tube (64, 66) being closed at one of its ends, and the tubes (64, 66) being sealed to one another at the other of their ends, the tubes (64, 66) being separated by the vacuum.

3. Solar collector (26) according to claim 2, **characterised in that** the inner tube (66) includes an outer surface oriented towards the outer tube (64) and an inner surface, **in that** the absorption layer (52) is placed against the said outer surface, and **in that** for the hot part (58) of the heat pipe (56), the reservoir (62) is applied at least locally against the said inner surface.

4. Solar collector (26) according to one of the preceding claims, **characterised in that** it includes a thermally conductive interface (69) arranged between the absorption layer (52) and the hot part (58) of the heat pipe (56).

5. Solar collector (26) according to one of the preceding claims, **characterised in that** a transverse section of the hot part (58) is in the form of an arc of a circle of angle (A) comprised between 180° and 220°.

6. Solar collector (26) according to one of the preceding claims, **characterised in that** the cold part (60) of the heat pipe (56) is suitable to be placed in contact with a cylindrical pipe (48), and **in that** the cold part (60) is in the form of at least one semi-cylinder.

7. Solar collector (26) according to claim 6, **characterised in that** the axis (I) of the semi-cylinder of the hot part (58) is distinct from the axis (X) of the semi-cylinder of the cold part (60), and **in that** the heat pipe (56) includes a narrowing (71) of its circumferential and/or longitudinal extent between the hot part (58) and the cold part (60) in relation to its extent in the running part of the hot (58) and cold (60) parts, the narrowing (71) forming a connecting joint between the hot part (58) and the cold part (60).

8. Solar collector (26) according to one of the preceding claims, **characterised in that** the reservoir (62) includes at least three circulation channels (70) for the heat pipe fluid (63), extending generally side by side.

9. Solar collector (26) according to claim 8, **characterised in that** the or each channel (70) is oriented substantially according to the axis (I) of the semi-cylinder of the hot part (58).

10. Solar collector (26) according to one of the preceding claims, **characterised in that** the heat pipe (56) is made of aluminium.

11. Solar collector (26) according to one of the preceding claims, **characterised in that** the heat pipe (56) is formed of two metal sheets (72A, 72B) merged with one another outside the zone forming the reservoir (62), the reservoir (62) being formed by an interstice between the two sheets (72A, 72B).

12. Solar collector (26) according to one of the preceding claims, **characterised in that** the heat pipe (56) has a sheet structure on the left surface, the sheet including a network of channels (70) forming the reservoir (62), these channels (70) being linked by a web.

13. System (2) for the production of hot water from solar energy comprising:
- a plurality of solar collectors (26) suitable for heating a heat transfer fluid (10) from solar energy, and
- a circuit (14) for transporting the heat transfer fluid (10) between the solar collectors (26) and a hot water distributor (80),
**characterised in that** the solar collectors (26) comply with one of claims 1 to 12.

14. System according to claim 13, **characterised in that** the transport circuit (14) comprises a pipe (48) for transporting the heat transfer fluid (10), and **in that** the system comprises, for each solar collector (26), a piece (69) for fixing the collector (26) to the pipe (48), the said fixing piece (69) being thermally conductive and placed in contact with the pipe (48).

15. Installation for generating electric power from solar energy comprising:
- a system for producing hot water (2),
- a cold source (4), and
- a thermodynamic machine (6) for producing electricity using the hot water produced by the said system (2) and the cold source (4),
**characterised in that** the system for producing hot water (2) complies with claim 13 or 14.
